# EUROPEAN PATENT APPLICATION

(11) **EP 3 451 753 A1**
(43) Date of publication of application: **06.03.2019**
(21) Application number: 16904033.4
(22) Date of filing: 01.06.2016
(51) Int. Cl.: H04W 56/00, H04W 16/32

(54) **BASE STATION, MOBILE STATION, AND MOBILE COMMUNICATION SYSTEM**

(71) Applicant: Mitsubishi Electric Corporation, Chiyoda-ku Tokyo 100-8310 (JP)
(72) Inventor: KUSANO, Masaaki, Tokyo 100-8310 (JP)
(74) Representative: Pfenning, Meinig & Partner mbB
(86) International application number: PCT/JP2016/066305
(87) International publication number: WO 2017/208408

(57) **Abstract**

The present invention is directed to a small cell base station (3) covering a small cell located within a macrocell including a cell search unit (307) that performs cell search to detect timing of reception of a downlink signal sent from a macrocell base station, being a base station covering the macrocell; and an L2 function unit (303) that communicates with the macrocell base station using random access to acquire transmission timing information, which is information on timing of sending of an uplink signal to the macrocell base station. The small cell base station (3) send a downlink signal for a mobile station in synchronization with the timing of reception of the downlink signal, and receives an uplink signal from a mobile station at timing based on the transmission timing information.

## Description

### Field

The present invention relates to a base station, a mobile station, and a mobile communication system, for use in wireless communication.

### Background

A mobile communication system uses a macrocell base station covering an area of several kilometers in cell radius and a small cell base station covering a relatively small area of several tens of meters in cell radius. A mobile communication system using a macrocell base station and small cell base stations forms a heterogeneous network (HetNet) in which multiple small cells are deployed in a macrocell to allow a mobile station in the coverage area of a small cell to establish a connection to a small cell base station. This configuration reduces the load of a macrocell base station serving a large number of mobile stations, and also increases communication capacity per mobile station, thereby enabling a mobile communication system to have a higher capacity.

To increase the capacity of a mobile communication system that uses a HetNet, the Long Term Evolution-Advanced (LTE-Advanced) standard being developed by Third Generation Partnership Project (3GPP) is designed to include technologies such as carrier aggregation (CA) that enables a single mobile station to simultaneously use multiple frequency bands to increase the transmission rate, and dual connectivity (DC) that allows a single mobile station to establish connections simultaneously to two base stations (e.g., a macrocell base station and a small cell base station). These technologies enable, for example, a mobile station to be simultaneously connected to a macrocell base station and to a small cell base station that use different frequencies. This provides high throughput communication using small cells, and reduces radio interference across a macrocell and a small cell, and thus the communication capacity of a mobile communication system is dramatically increased. This also ensures the mobility provided by the macrocell. In addition, the CA and DC technologies are also expected to be applied to a fifth generation mobile communication system (5G), not only to an LTE-Advanced system.

However, DC in a HetNet environment may cause a problem of radio interference in a situation in which a macrocell base station serves as a master evolved Node B (MeNB), a small cell base station serves as a secondary evolved Node B (SeNB), and two or more SeNBs use a same frequency. To reduce such radio interference, performing high accuracy synchronization of radio frame timing among base stations is suggested (e.g., Patent Literature 1).

In addition, DC is provided such that, upon transmission of an upstream (uplink: UL) signal to an MeNB or to an SeNB, a mobile station (user equipment: UE) separately manages the timing of sending of a UL signal to an MeNB and the timing of sending of a UL signal to an SeNB. Due to a possibly large difference between a propagation delay between the MeNB and the UE (hereinafter referred to as "MeNB-UE propagation delay") and an SeNB-UE propagation delay depending on the distances therebetween, the MeNB and the SeNB perform timing advance (TA) control independently of each other, and the UE manages UL signal transmission timings for the MeNB and for the SeNB as the TA values separately, thus to enable the MeNB or the SeNB to receive a UL signal sent from the UE at a suitable timing (Non-Patent Literature 1). A group of cells that provide TA control is referred to as "timing advance group (TAG)." In DC, an MeNB cell belongs to a primary TAG (pTAG), while an SeNB cell belongs to a secondary TAG (sTAG); and the UE manages a TA value for each of the TAGs.

### Citation List

### Patent Literature

Patent Literature 1: Japanese Patent Application Laid-open No. 2015-32997

### Non-Patent Literature

Non Patent Literature 1: 3GPP TS 36.213 V12.8.0 (2015-12) §4.2.3

### Summary

### Technical Problem

In DC, a UE manages two TA values for an MeNB and an SeNB to send a UL signal. This presents a problem in requiring a UE to have a larger circuit size and a higher amount of processing than when a UL signal is sent using one TA value such as a case in a conventional LTE environment.

The synchronization between base stations described in Patent Literature 1 is synchronization of down link (DL) radio frame timing by temporally synchronizing the MeNB with the SeNB, and transmission of a UL signal in DC still requires the UE to manage two TA values similarly to the case of Non-Patent Literature 1.

The present invention has been made in view of the foregoing, and it is an object of the present invention to provide a base station capable of reducing the circuit size and the amount of processing of a mobile station that supports DC.

### Solution to Problem

To solve the problem and achieve the object described above, the present invention is directed to a base station covering a small cell located within a macrocell. The base station includes a cell search unit that performs cell search to detect timing of reception of a downlink signal sent from a macrocell base station, being a base station covering the macrocell, and an information acquisition unit that communicates with the macrocell base station using random access to acquire transmission timing information, which is information on timing of sending of an uplink signal to the macrocell base station. The base station sends a downlink signal for a mobile station in synchronization with the timing of reception of the downlink signal sent from the macrocell base station, and receives an uplink signal from a mobile station at timing based on the transmission timing information.

### Advantageous Effects of Invention

A base station according to the present invention provides an advantage in being capable of reducing the circuit size and the amount of processing of a mobile station that supports DC.

### Brief Description of Drawings

FIG. 1 is a diagram illustrating an example configuration of a mobile communication system according to a first embodiment.
FIG. 2 is a diagram illustrating an example of radio frame timing for a mobile system using an FDD scheme.
FIG. 3 is a diagram illustrating an example of radio frame timing for a mobile system using a TDD scheme.
FIG. 4 is a sequence chart illustrating an example of an operation of synchronization with an MeNB performed by an SeNB according to the first embodiment.
FIG. 5 is a sequence chart illustrating an example of an operation of starting DC by a mobile station connected to an MeNB.
FIG. 6 is a diagram illustrating an example configuration of a macrocell base station according to the first embodiment.
FIG. 7 is a diagram illustrating an example configuration of a small cell base station according to the first embodiment.
FIG. 8 is a diagram illustrating an example configuration of a mobile station according to the first embodiment.
FIG. 9 is a diagram illustrating an example hardware configuration of a small cell base station according to the first embodiment.
FIG. 10 is a diagram illustrating an example hardware configuration when a small cell base station according to the first embodiment is implemented in hardware including a CPU and a memory.
FIG. 11 is a sequence chart illustrating an example of an operation of synchronization with an MeNB performed by an SeNB according to a second embodiment.
FIG. 12 is a sequence chart illustrating an example of an operation of synchronization with an MeNB performed by an SeNB according to a third embodiment.
FIG. 13 is a diagram for explaining preamble IDs used in a mobile communication system according to a fourth embodiment.

### Description of Embodiments

A base station, a mobile station, and a mobile communication system according to embodiments of the present invention will be described in detail with reference to the drawings. Note that these embodiments are not intended to limit the scope of the present invention. Although the embodiments herein describe the present invention using a DC scenario in LTE-Advanced by way of example, the present invention is also applicable to a mobile communication system (e.g., 5G mobile communication system) that provides DC.

### First Embodiment.

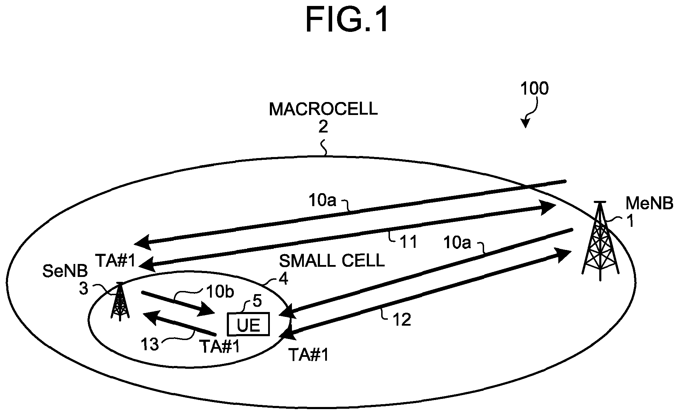

FIG. 1 is a diagram illustrating an example configuration of a mobile communication system according to a first embodiment of the present invention. Specifically, FIG. 1 illustrates an example of a mobile communication system 100 including a macrocell base station 1 forming a macrocell 2, and a small cell base station 3 forming a small cell 4 located within the macrocell 2 to construct a HetNet. If a UE 5 located within the small cell 4 operates in DC, the macrocell base station 1 serves as the MeNB, and the small cell base station 3 serves as an SeNB. Although the MeNB is not limited to a macrocell base station, and the SeNB is not limited to a small cell base station, the description of the present invention hereinafter assumes that the macrocell base station 1 is the MeNB 1, and the small cell base station 3 is the SeNB 3. Although FIG. 1 illustrates only one SeNB 3 within the macrocell 2, multiple SeNBs 3 may be located within the macrocell 2.

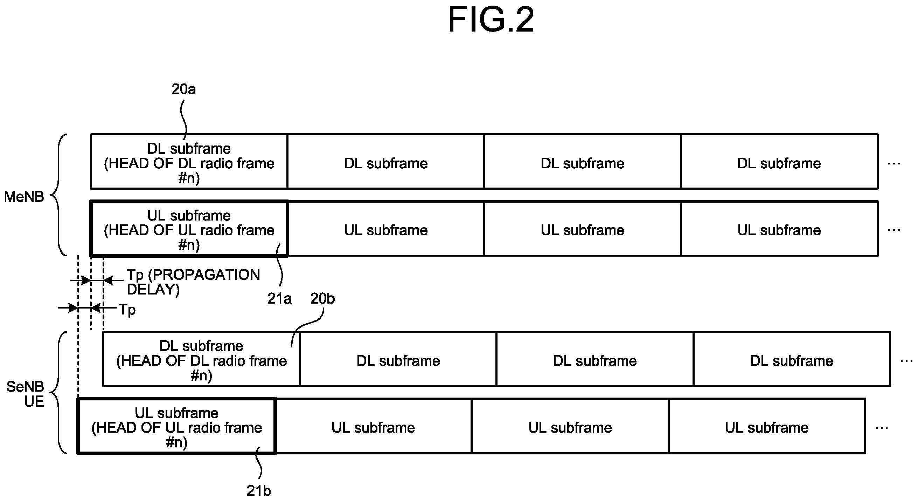

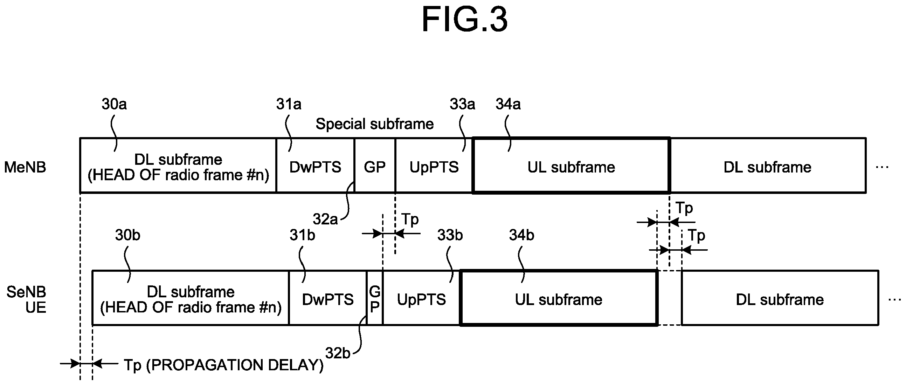

In the mobile communication system 100 illustrated in FIG. 1, the MeNB 1 sends DL signals 10a, such as a synchronization signal and broadcast information, at predetermined timings. The SeNB 3 according to the present embodiment has a cell search function similar to a cell search function that is one of the functions of the mobile station (UE) 5. A cell search function is defined in the LTE standard. The SeNB 3 performs cell search upon activation to receive a DL signal 10a being sent from the MeNB 1, and finds DL radio frame timing of the MeNB 1 from a synchronization signal received as a DL signal 10a, thus to perform DL synchronization with the MeNB 1. The SeNB 3 then performs random access 11 to the MeNB 1 to perform UL synchronization with the MeNB 1. FIG. 1 illustrates a process of acquiring a value "TA #1" as the TA value for UL synchronization taking into consideration an MeNB 1-SeNB 3 propagation delay. The SeNB 3 performs DL synchronization and UL synchronization with the MeBN 1 similarly to when a mobile station performs DL synchronization and UL synchronization with a base station in LTE-Advanced. Details of such DL synchronization and UL synchronization will be described later illustrating DL and UL radio frame timings with reference to FIGS. 2 and 3.

Next, the SeNB 3 starts to send DL signals 10b, such as a synchronization signal and broadcast information in synchronization with the DL radio frame timing of the MeNB 1 that has been found. The SeNB 3 also starts to operate using the UL signal reception timing, obtained by applying the value "TA #1" acquired from the MeNB 1.

If the UE 5 starts to communicate with the MeNB 1 in a case of communication with the MeNB 1, the UE 5 receives the DL signal 10a being sent from the MeNB 1, and finds a DL radio frame timing of the MeNB 1 to perform DL synchronization with the MeNB 1, similarly to when the SeNB 3 performs synchronization with the MeNB 1. The UE 5 then performs random access 12 to the MeNB 1 to perform UL synchronization. If the UE 5 establishes a connection to the MeNB 1 from a location within the small cell 4, the UE 5 acquires, by the random access 12, a value close to "TA #1" acquired by the SeNB 3 described above using the random access 11, as the TA value for UL synchronization. This is because the MeNB 1-to-SeNB 3 distance and the MeNB 1-to-UE 5 distance are almost the same within the small cell 4 having a small cell radius. Indeed, the acquired TA value for UL synchronization is, actually, slightly different from the value TA #1, but the difference is small enough not to adversely affect the demodulation performance upon UL signal reception. For simplicity of illustration, the TA value for the MeNB 1-to-UE 5 UL synchronization is herein described as "TA #1," which is the same as the TA value for the MeNB 1-to-SeNB 3 UL synchronization. Note that even if the UE 5 establishes a connection to the MeNB 1 outside the small cell 4, and thereafter enters the small cell 4, the difference between the DL signal reception timing and the UL signal transmission timing in the UE 5 becomes similar to "TA #1" by TA control between the MeNB 1 and the UE 5.

When the UE 5 is communicating with the MeNB 1, and the SeNB 3 is added to provide DC, the SeNB 3 is already using a UL signal reception timing that has been adjusted taking into consideration the propagation delay with respect to the MeNB 1 as described above. Due to a negligible propagation delay to a degree not to reduce demodulation performance upon UL signal reception in the SeNB 3 within the small cell 4 having a small cell radius, the UE 5 can use the same timing for sending a UL signal to the MeNB 1 and for sending a UL signal to the SeNB 3. That is, the UE 5 can send the UL signal 13 to the SeNB 3 using the value "TA #1."

This eliminates the need for the UE 5 to have two values for the UL signal transmission timing for the MeNB 1 and for the SeNB 3, thereby enabling a device configuration having a reduced circuit size and a reduced amount of processing to be provided. Obviously, a UE that can have two values for UL signal transmission timing as a conventional UE can also establish a DC connection to the MeNB 1 and to the SeNB 3. The present invention further enables a UE configured to have only one value for UL signal transmission timing to establish a DC connection.

The operation described above is applicable to both radio frame structures in a frequency division duplex (FDD) mode and in a time division duplex (TDD) mode. FIG. 2 is a diagram illustrating DL and UL radio frame timings for the MeNB 1, the SeNB 3, and the UE 5 using an FDD radio frame structure as an example.

FIG. 2 illustrates a DL subframe 20a, which is the first subframe of a DL radio frame #n sent by the MeNB 1, and a UL subframe 21a, which is the first subframe of a UL radio frame #n received by the MeNB 1. The subframe boundary (i.e., the boundary to another DL subframe) of the DL subframe 20a and the subframe boundary of the UL subframe 21a are temporally aligned with each other.

FIG. 2 also illustrates a DL subframe 20b, which is the first subframe of a DL radio frame #n used by the SeNB 3. The radio frame timing of the DL subframe 20b, i.e., the timing at which the SeNB 3 sends the DL subframe 20b is determined based on DL signals, such as a synchronization signal and broadcast information, received from the MeNB 1. Specifically, the radio frame timing of the DL subframe 20b lags the timing at which the MeNB 1 sends the DL subframe 20a (radio frame timing of the DL subframe 20a) by an MeNB 1-SeNB 3 propagation delay Tp. The timing at which the SeNB 3 sends a UL radio frame to the MeNB 1 is determined based on the TA value acquired by the SeNB 3 by performing a random access procedure to the MeNB 1. Specifically, the transmission timing of the UL subframe 21b of the UL radio frame #n leads the timing at which the MeNB 1 receives the UL subframe 21a by the MeNB 1-SeNB 3 propagation delay Tp.

The radio frame timings used by the UE 5, i.e., the timing at which the UE 5 receives a DL radio frame and the timing at which the UE 5 sends a DL radio frame, are determined while the UE 5 is connected to the MeNB 1. Note that if the UE 5 is located within the small cell 4 covered by the SeNB 3, the radio frame timings used by the UE 5 can be considered to be approximately aligned with the radio frame timings used by the SeNB 3, that is, as illustrated in FIG. 2, with the timing of the DL subframe 20b and the timing of the UL subframe 21b.

As illustrated in FIG. 2, assuming that the radio frame timings used by the SeNB 3 and the radio frame timings used by the UE 5 are aligned to each other, and therefore the SeNB 3-UE 5 propagation delay is negligible to a degree not to reduce demodulation performance, the SeNB 3 can demodulate a UL signal sent to the SeNB 3 at the timing of the UL subframe 21b by the UE 5. Obviously, if the UE 5 sends a UL signal to the MeNB 1 at the radio frame timing illustrated in FIG. 2, MeNB 1 can also demodulate that UL signal. The UE 5 needs to hold only one value for the UL radio frame timing as the UL signal transmission timing.

FIG. 3 is a diagram illustrating DL and UL radio frame timings for the MeNB 1, the SeNB 3, and the UE 5 using a TDD radio frame structure as an example.

FIG. 3 illustrates a DL subframe 30a, which is the first subframe of a radio frame #n sent by the MeNB 1. The subframe that follows is referred to as a special subframe, and is formed of a downlink pilot time slot (DwPTS) 31a, a guard period (GP) 32a, and an uplink pilot time slot (UpPTS) 33a. The special subframe is followed by a UL subframe 34a.

The DL subframe 30b is the first, DL subframe of a radio frame #n used by the SeNB 3. The radio frame timing of the DL subframe 30b is determined based on DL signals, such as a synchronization signal and broadcast information, received from the MeNB 1. The radio frame timing of the DL subframe 30b lags the radio frame timing of the DL subframe 30a by the MeNB 1-SeNB 3 propagation delay Tp. The timing at which the SeNB 3 sends a radio frame to the MeNB 1, i.e., the transmission timings of the UpPTS 33b and of the UL subframe 34b, are determined based on the TA value acquired by the SeNB 3 by performing a random access procedure to the MeNB 1. Specifically, the transmission timings of the UpPTS 33b and of the UL subframe 34b respectively lead the timings at which the MeNB 1 receives the UpPTS 33a and the UL subframe 34a by the MeNB 1-SeNB 3 propagation delay Tp. In addition, similarly to the case of FIG. 2, the radio frame timings used by the UE 5 are approximately aligned with those of a radio frame used by the SeNB 3. Thus, the UE 5 needs to hold only one value for the UL signal transmission timing.

The description given above assumes that the UE 5 is connected to the MeNB 1. However, if the UE 5 is to establish a connection only to the SeNB 3 without using DC, the UE 5 receives DL signals, such as a synchronization signal and broadcast information, sent from the SeNB 3, and then performs a random access procedure to the SeNB 3 to determine the radio frame timings to be used by the UE 5 based on the radio frame timings of the SeNB 3. Thus, it is also possible for the UE 5 to establish a connection only to the SeNB 3.

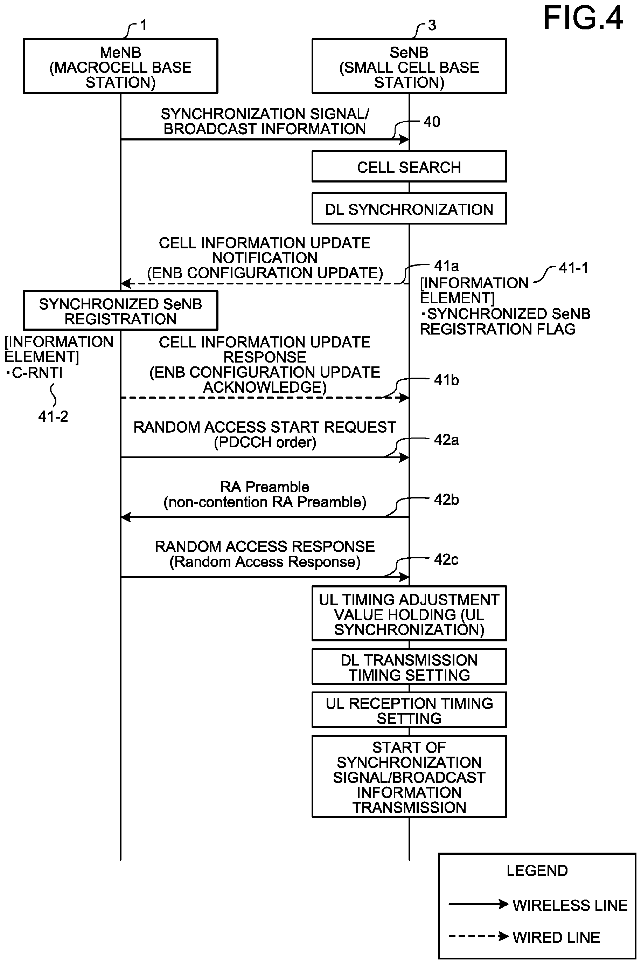

A procedure performed in the mobile communication system 100 illustrated in FIG. 1, in which the SeNB 3 performs DL synchronization and UL synchronization with the MeNB 1 upon activation of the SeNB 3, will next be described in detail referring to FIG. 4. It is assumed here that multiple SeNBs 3 are deployed in the macrocell 2. The mobile communication system 100 is configured such that an SeNB 3 performs DL synchronization and UL synchronization with the MeNB 1, and in an addition procedure of an SeNB 3 in DC, the MeNB 1 can select an SeNB 3 that has been synchronized with that MeNB 1. In FIG. 4, a solid arrow indicates a flow of a wireless signal sent or received via a wireless line, and a dashed arrow indicates a flow of a wired signal sent or received via a wired line.

Upon activation, the SeNB 3 performs synchronization with the MeNB 1 according to the procedure illustrated in FIG. 4. After activation, the SeNB 3 receives a synchronization signal and broadcast information (synchronization signal/broadcast information 40) being sent by the MeNB 1 through cell search to perform DL synchronization. In this process, the SeNB 3 has cell identification information (cell ID) of the MeNB 1 with which to be synchronized, and thus synchronizes itself with the base station having the same cell identification information among base stations that have been detected by cell search. At this stage, the SeNB 3 performs DL synchronization with the MeNB 1. Next, to inform the MeNB 1 that the cell covered by the SeNB 3 (i.e., the small cell 4) will be available, the SeNB 3 sends a cell information update notification 41a (eNB Configuration Update message) to the MeNB 1 via a wired line. An information element "synchronized SeNB registration flag" 41-1 is set in the cell information update notification 41a.

After reception of the cell information update notification 41a containing the information element "synchronized SeNB registration flag" 41-1, the MeNB 1 registers, or stores, the cell identification information of that SeNB 3 as the information of a selectable SeNB to make available, in a DC procedure, the SeNB 3 synchronized with that MeNB 1. Thus, synchronized SeNB registration is performed. Upon completion of the synchronized SeNB registration, the MeNB 1 sends a cell information update response 41b (eNB Configuration Update Acknowledge message) back to the SeNB 3 via a wired line. The cell information update response 41b contains an information element "cell radio network temporary identifier (C-RNTI)" 41-2 as the information used by the SeNB 3 for performing contention-free (also referred to as "non-contention") random access to the MeNB 1. The C-RNTI 41-2 is an identifier that enables the MeNB 1 to identify the UE 5 or the SeNB 3, and in this example, indicates a destination of a random access start request 42a (PDCCH order) used by the MeNB 1 to cause the SeNB 3 to start contention-free random access.

Next, the MeNB 1 sends the random access start request 42a to the base station indicated by the C-RNTI assigned as described above. This initiates a contention-free random access process, in which the SeNB 3 sends an RA Preamble message 42b (non-contention RA Preamble message), and then receives a random access response 42c (Random Access Response message). The random access response 42c contains a TA value. Upon reception of the random access response 42c, the SeNB 3 holds the TA value, which serves as a UL timing adjustment value, to perform UL synchronization with the MeNB 1, and then, sets the DL signal transmission timing (DL transmission timing setting) and sets the UL signal reception timing (UL reception timing setting). The timing of sending of a DL signal by the SeNB 3 (DL signal transmission timing) is set to the timing of reception of a DL signal from the MeNB 1, i.e., the timing at which the SeNB 3 receives a DL signal sent by the MeNB 1. In addition, the timing of reception of a UL signal by the SeNB 3 (UL signal reception timing) is set to the timing determined by the TA value acquired from the MeNB 1 during random access, specifically, the timing of sending of a UL signal to the MeNB 1, determined by the TA value. The timing of sending of a UL signal to the MeNB 1 is thus approximately aligned with the timing at which the UE 5 located within the small cell 4 covered by the SeNB 3 sends a UL signal to the MeNB 1. Upon completion of the process described above, the SeNB 3 starts to send a synchronization signal and broadcast information to initiate a normal operation of a base station. Note that the SeNB 3 sends the synchronization signal and broadcast information according to the timing that has been set at the DL transmission timing setting step.

Although FIGS. 1 and 4 illustrate an example in which the SeNB 3 performs DL synchronization and UL synchronization with the MeNB 1 upon activation, the SeNB 3 may perform the operation illustrated in FIG. 4 periodically (e.g., each night when the UE 5 is not connected to the SeNB 3, etc.) to keep the SeNB 3 in synchronization with the MeNB 1.

Meanwhile, according to the present invention, as described above referring to FIGS. 1, 2, and 3, the timing at which the UE 5 sends a UL signal to the SeNB 3 is aligned with the timing at which the UE 5 sends a UL signal to the MeNB 1, thereby eliminating the need to further acquire a TA value dependent on the SeNB 3-UE 5 propagation delay. This scheme can reduce the delay time with respect to the SeNB 3 addition procedure.

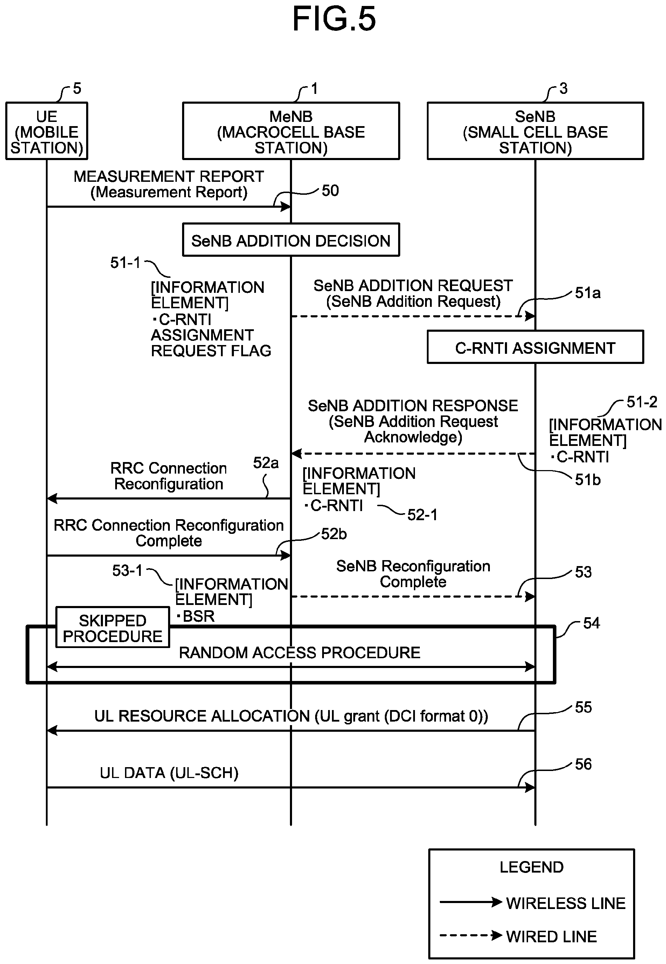

Next, a procedure of adding the SeNB 3 to provide DC while the UE 5 is connected to the MeNB 1 in the mobile communication system 100 according to the present embodiment will be described referring to FIG. 5. FIG. 5 is a sequence chart illustrating an example of a procedure of starting DC by a mobile station connected to the MeNB 1. The procedure illustrated in FIG. 5 skips the random access process performed by the UE 5 to the base station that will be added, to speed up, i.e., to reduce the time required for, the SeNB 3 addition procedure.

The UE 5 measures the intensity of a DL signal from a peripheral cell while connected to the MeNB 1, i.e., the intensity of a DL signal sent from a base station other than the MeNB 1 connected to the UE 5. If that intensity satisfies a predetermined condition, the UE 5 sends a measurement report 50 (Measurement Report message) to the MeNB 1 as illustrated in FIG. 5. The measurement report 50 contains the intensity of the DL signal and cell identification information.

After reception of the measurement report 50 from the UE 5, the MeNB 1 uses the intensity of the DL signal and the cell identification information contained in the measurement report 50 to make an SeNB addition decision, in which it is determined whether DC can be provided. If it is determined that DC can be provided, the SeNB addition procedure is performed. As described above referring to FIG. 4, cell identification information of the SeNB 3 in synchronization with the MeNB 1 is registered in the MeNB 1 in the mobile communication system 100. The MeNB 1 determines that DC can be provided if the cell identification information reported in the measurement report 50 matches the cell identification information that has been registered, and the intensity of the DL signal of the SeNB is greater than or equal to a predetermined threshold. Upon determination that DC can be provided, the MeNB 1 determines to add that SeNB, and sends an SeNB addition request 51a (SeNB Addition Request message) to the SeNB 3 via a wired line.

In the mobile communication system 100 according to the present embodiment, an information element "C-RNTI assignment request flag" 51-1 is set in the SeNB addition request 51a. After reception of the SeNB addition request 51a containing the information element "C-RNTI assignment request flag" 51-1, the SeNB 3 assigns, to the UE 5, a C-RNTI for identifying the UE 5, sets the C-RNTI in an SeNB addition response 51b (SeNB Addition Request Acknowledge message) as an information element "C-RNTI" 51-2, and sends the SeNB addition response 51b back to the MeNB 1 via a wired line. The MeNB 1 sets the C-RNTI assigned by the SeNB 3 in an RRC Connection Reconfiguration message 52a as an information element "C-RNTI" 52-1, and sends the RRC Connection Reconfiguration message 52a to the UE 5.

After reception of the RRC Connection Reconfiguration message 52a, the UE 5 configures itself to thereafter communicate with the SeNB 3 using the C-RNTI assigned. Thus, an SeNB addition process is performed. In addition, the UE 5 learns that acquisition of a C-RNTI and a TA value through the subsequent random access procedure is no longer required, from the fact that the information element "C-RNTI" 52-1 has already been set in the RRC Connection Reconfiguration message 52a. After completion of the SeNB addition, the UE 5 sends an RRC Connection Reconfiguration Complete message 52b back to the MeNB 1.

After reception of the RRC Connection Reconfiguration Complete message 52b, the MeNB 1 notifies the SeNB 3 that the SeNB addition is successfully completed in the UE 5 using an SeNB Reconfiguration Complete message 53 via a wired line. In this step, the MeNB 1 sets a burrer status report (BSR) including the amount of buffered UL data reported from the UE 5 in an SeNB Reconfiguration Complete message 53 as an information element "BSR" 53-1 to notify the SeNB 3 of the amount of buffered UL data which the UE 5 is about to send in UL transmission.

Conventionally, a random access procedure 54 would thereafter be performed between the added SeNB 3 and the UE 5 to let the UE 5 acquire the C-RNTI and the TA value, and thus the SeNB addition procedure would be complete in the UE 5. However, the UE 5 according to the present embodiment has already acquired the C-RNTI for use in a communication with the added SeNB as the information element "C-RNTI" 52-1 as described above, and moreover, the UL signal transmission timing of the UE 5 for the SeNB 3 corresponding to the TA value is aligned to the UL signal transmission timing of the UE 5 for the MeNB 1. Accordingly, the random access procedure 54 is skipped.

In addition, if the UE 5 performs the random access procedure as would be done conventionally, the UE 5 reporting the BSR value to the SeNB 3 enables the SeNB 3 to allocate a UL resource. In contrast, in the mobile communication system 100 according to the present embodiment, the MeNB 1 has notified the SeNB 3 of the BSR value that has already been recognized, using the information element "BSR" 53-1 as described above. This operation enables the SeNB 3 to perform UL resource allocation 55 even when the random access procedure is skipped, thereby enabling the UE 5 to immediately start to send UL data 56. Obviously, DL data can also be immediately sent from the SeNB 3 to the UE 5 since the C-RNTI has already been assigned to the UE 5.

The present embodiment has been described in which the required information elements are set in the corresponding messages exchanged between the MeNB 1 and the SeNB 3 and in the corresponding messages exchanged between the MeNB 1 and the UE 5 to reduce the number of TA values used and to simplify the procedure. However, the messages for including the information elements described above are not limited to the messages described above. The information elements to be exchanged between the MeNB 1 and the SeNB 3 and the information element to be exchanged between the MeNB 1 and the UE 5 may be set in other message(s) and then be transmitted.

The procedure described above enables the SeNB 3 to perform random access to the MeNB 1 in a DC procedure, and enables the UE 5 within the small cell 4 to use a same UL signal transmission timing for both the MeNB 1 and the SeNB 3. This provides an advantage in reducing the circuit size and the amount of processing of the UE 5, and moreover, enables the random access procedure to be skipped in the SeNB addition procedure. This reduces the time required for the SeNB addition procedure, thereby providing an advantage in reducing the time before initiating data transmission between the SeNB 3 and the UE 5.

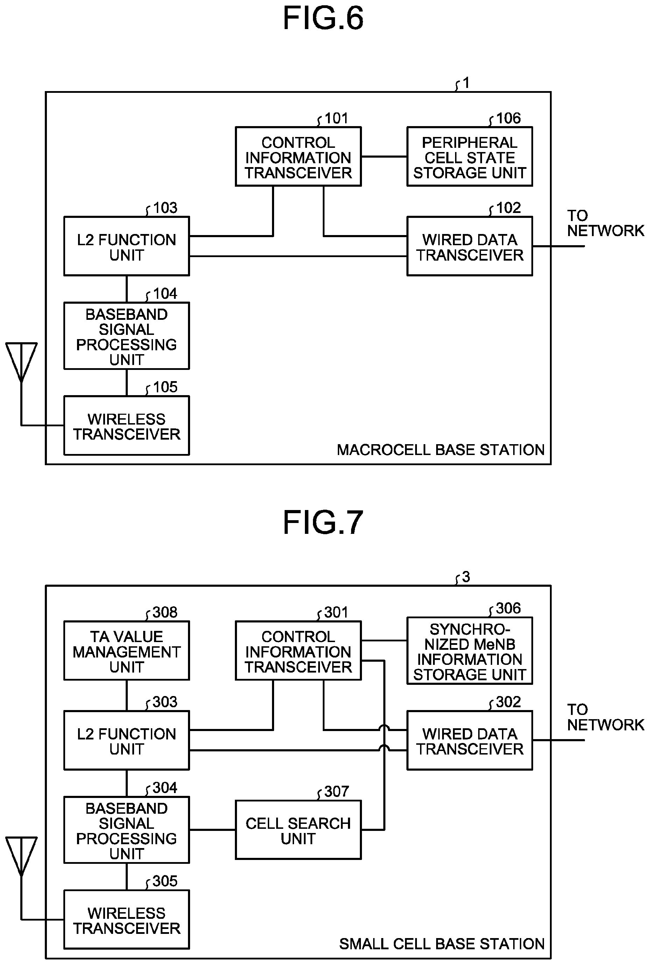

The macrocell base station 1, the small cell base station 3, and the mobile station 3 included in the mobile communication system 100 will next be described with reference to FIGS. 6 to 8.

FIG. 6 is a diagram illustrating an example configuration of the macrocell base station 1. The macrocell base station 1 includes a control information transceiver 101, a wired data transceiver 102, an L2 function unit 103, a baseband signal processing unit 104, a wireless transceiver 105, and a peripheral cell state storage unit 106.

The control information transceiver 101 sends and receives radio resource control (RRC) messages and other messages such as cell information update notification, cell information update response, SeNB addition request, SeNB addition response, and SeNB Reconfiguration Complete messages, and provides control with respect to SeNB addition, including an SeNB addition decision. That is, the control information transceiver 101 functions to operate as a control unit that sends an SeNB addition request to the small cell base station, and requests to start communication with a mobile station connected to that macrocell base station.

The wired data transceiver 102 is connected to a network via a transmission medium such as an optical cable or a twisted pair cable, and exchanges packets in Ethernet frames or the like with another base station (i.e., macrocell base station or small cell base station) or with a device at a higher hierarchical level, via the network.

The L2 function unit 103 performs protocol processing for communicating with a mobile station, i.e., protocol processing for medium access control (MAC), radio link control (RLC), and packet data convergence protocol (PDCP) layers, etc. The L2 function unit 103 also performs conversion from a wired data format to a wireless data format, and from a wireless data format to a wired data format. The L2 function unit 103 further provides control of the random access procedure.

The baseband signal processing unit 104 modulates and demodulates a wireless signal. The wireless transceiver 105 sends and receives a wireless signal.

The peripheral cell state storage unit 106 stores the operational state of each base station covering a peripheral cell including a small cell, and information on a small cell base station in synchronization with the macrocell base station. The peripheral cell state storage unit 106 functions to operate as a storage unit that stores cell identification information that identifies a small cell base station.

FIG. 7 is a diagram illustrating an example configuration of the small cell base station 3. The small cell base station 3 includes a control information transceiver 301, a wired data transceiver 302, an L2 function unit 303, a baseband signal processing unit 304, a wireless transceiver 305, a synchronized MeNB information storage unit 306, a cell search unit 307, and a TA value management unit 308.

The control information transceiver 301 sends and receives RRC messages and other messages such as cell information update notification, cell information update response, SeNB addition request, SeNB addition response, and SeNB Reconfiguration Complete messages, and provides control with respect to SeNB addition.

The wired data transceiver 302 is connected to a network via a transmission medium such as an optical cable or a twisted pair cable, and exchanges packets in Ethernet frames or the like with another base station (i.e., macrocell base station or small cell base station) or with a device at a higher hierarchical level, via the network.

The L2 function unit 303 performs protocol processing for communicating with a mobile station, i.e., protocol processing for MAC, RLC, and PDCP layers, etc.

The L2 function unit 303 also performs conversion from a wired data format to a wireless data format, and from a wireless data format to a wired data format. The L2 function unit 303 also provides control of the random access procedure. That is, the L2 function unit 303 functions to operate as an information acquisition unit that performs random access to the MeNB 1 to acquire a TA value, which is information on timing of sending a UL signal.

The baseband signal processing unit 304 modulates and demodulates a wireless signal. The wireless transceiver 305 sends and receives a wireless signal.

The synchronized MeNB information storage unit 306 stores cell identification information that identifies the macrocell base station that is to be synchronized with the small cell base station 3. The cell identification information is set from the outside upon installation of the small cell 3, or during a time period after the installation and before the start of operation. The small cell base station 3 may be configured such that the cell identification information is set using a dedicated device for setting cell identification information, or configured to obtain cell identification information from the outside through communication using a wired line or the like, and then to set the cell identification information.

The cell search unit 307 performs cell search for a peripheral cell upon activation of that device (i.e., the small cell base station 3) or the like to detect a macrocell covered by a macrocell base station.

The TA value management unit 308 holds a TA value acquired by the small cell base station 3 by performing random access to the macrocell base station. The TA value is used as UL signal reception timing in that small cell.

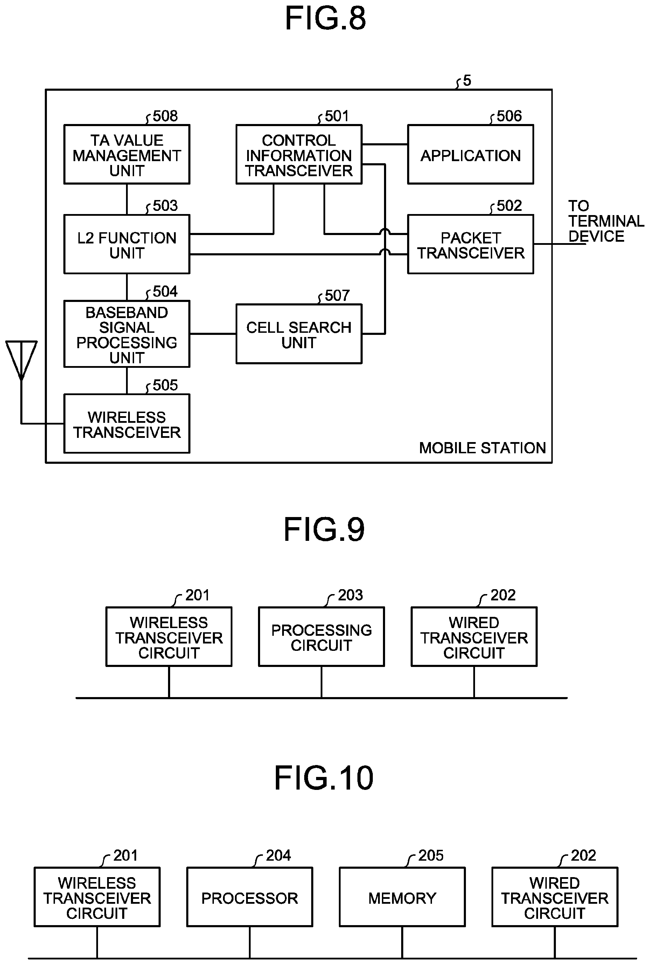

FIG. 8 is a diagram illustrating an example configuration of the mobile station 5. The mobile station 5 includes a control information transceiver 501, a packet transceiver 502, an L2 function unit 503, a baseband signal processing unit 504, a wireless transceiver 505, an application 506, a cell search unit 507, and a TA value management unit 508.

The control information transceiver 501 sends and receives RRC messages, and provides control with respect to SeNB addition.

The packet transceiver 502 packetizes data that is to be sent from the application 506 in that device, i.e., the mobile station 5, and sends the packetized data to a macrocell base station or to a small cell base station. In addition, the packet transceiver 502 extracts data that is to be received by the application 506 from a packet received from a macrocell base station or from a small cell base station, and outputs the data to the application 506. Moreover, the packet transceiver 502 exchanges packets with an external terminal device.

The L2 function unit 503 performs protocol processing for communicating with a base station, i.e., protocol processing for MAC, RLC, and PDCP layers, etc. The L2 function unit 503 also performs conversion from a wired data format to a wireless data format, and from a wireless data format to a wired data format. The L2 function unit 503 also provides control of the random access procedure.

The baseband signal processing unit 504 modulates and demodulates a wireless signal. The wireless transceiver 505 sends and receives a wireless signal. The application 506 is application software such as a web browser.

The cell search unit 507 performs cell search for a peripheral cell to be used in SeNB addition, and cell search for a peripheral cell to be used in handover caused by movement of the mobile station 5 to detect a macrocell covered by a macrocell base station and a small cell covered by a small cell base station. The cell search unit 507 functions to detect timing of reception of a downlink signal sent from a macrocell base station.

The TA value management unit 508 holds the TA value acquired from a macrocell base station or from a small cell base station upon establishment of, or during maintaining of, a connection to that macrocell base station or small cell base station. The TA value is used as UL signal transmission timing.

The hardware configuration of the small cell base station will now be described. FIG. 9 is a diagram illustrating an example hardware configuration of a small cell base station.

In the small cell base station 3, the wireless transceiver 305 is implemented in a wireless transceiver circuit 201, and the wired data transceiver 302 is implemented in a wired transceiver circuit 202. The control information transceiver 301, the L2 function unit 303, the baseband signal processing unit 304, the synchronized MeNB information storage unit 306, the cell search unit 307, and the TA value management unit 308 are implemented in a processing circuit 203. That is, the small cell base station 3 includes, as the processing circuit 203, a processing circuit that performs cell search for a peripheral cell, and receives a synchronization signal and broadcast information being sent by a macrocell base station to perform DL synchronization; and a processing circuit that performs random access to acquire a TA value, which serves as a UL signal transmission timing. The processing circuit 203 may be a dedicated hardware element or a central processing unit (CPU) (also referred to as: central processing device, processing device, computing unit, microprocessor, microcomputer, processor, or digital signal processor (DSP)) that executes a program stored in a memory.

If the processing circuit 203 is a dedicated hardware element, the processing circuit 203 is, for example, a single circuit, a set of multiple circuits, a programmed processor, a set of multiple programmed processors, an application specific integrated circuit (ASIC), a field programmable gate array (FPGA), or a combination thereof. The functions of the control information transceiver 301, the L2 function unit 303, the baseband signal processing unit 304, the synchronized MeNB information storage unit 306, the cell search unit 307, and the TA value management unit 308 may each be implemented in a separate processing circuit, or a part or all of the functions may be classified into groups and one group of the functions may be implemented in one processing circuit.

A hardware configuration when the processing circuit 203 is a CPU that executes a program stored in a memory is illustrated in FIG. 10. In this case, the processing circuit 203 is formed of a processor 204 and a memory 205, and the functions of the control information transceiver 301, the L2 function unit 303, the baseband signal processing unit 304, the cell search unit 307, and the TA value management unit 308 are implemented by software, firmware, or a combination of software and firmware. The synchronized MeNB information storage unit 306 is implemented by the memory 205. Software and firmware are described as a program or programs, and stored in the memory 205. The processor 204 reads and executes a program stored in the memory 205 to provide a function of each of the components described above. As used herein, the term "memory" may refer to, for example, a non-volatile or volatile semiconductor memory, such as a random access memory (RAM), a read-only memory (ROM), a flash memory, an erasable programmable ROM (EPROM), or an electrically erasable programmable ROM (EEPROM); a magnetic disk, a flexible disk, an optical disk, a compact disc, a MiniDisc, a DVD, or the like.

Note that the functions of the control information transceiver 301, the L2 function unit 303, the baseband signal processing unit 304, the cell search unit 307, and the TA value management unit 308 may partially implemented by a dedicated hardware element, and partially implemented by a combination of software or firmware and a memory.

As described above, the processing circuit 203 can provide the functions described above by hardware, software, firmware, a memory, or a combination thereof.

Although the description has been made in terms of the small cell base station 3, the control information transceiver 101, the L2 function unit 103, the baseband signal processing unit 104, and the peripheral cell state storage unit 106 of the macrocell base station 1 can also be implemented in hardware having a configuration illustrated in FIGS. 9 and 10. Similarly, the control information transceiver 501, the packet transceiver 502, the L2 function unit 503, the baseband signal processing unit 504, the cell search unit 507, and the TA value management unit 508 of the mobile station 5 can also be implemented in hardware having a configuration illustrated in FIGS. 9 and 10.

As described above, in the mobile communication system according to the first embodiment, the small cell base station has a cell search function. The small cell base station performs cell search after being activated, and upon detection of the macrocell base station to synchronize, performs DL synchronization. The small cell base station then performs random access to acquire a TA value, and performs UL synchronization. After completion of synchronization with the macrocell base station, the small cell base station sends a DL signal in synchronization with the timing of reception of a DL signal from the macrocell base station, and receives a UL signal at timing determined from the TA value. In addition, after reception, from the mobile station, of a report of the intensity of a DL signal in a peripheral cell and of cell identification information, the macrocell base station checks whether there is a DC-applicable small cell base station. If there is a DC-applicable small cell base station, the macrocell base station acquires information (C-RNTI) for identifying the mobile station from the DC-applicable small cell base station, and then sends the acquired information to the mobile station. After reception of the C-RNTI, the mobile station establishes a connection to the small cell base station using the C-RNTI received. During this step, the mobile station performs no random access to the small cell base station to which a connection is to be established. The mobile station uses the TA value acquired in the random access performed to establish a connection to the macrocell base station to send a UL signal to the small cell base station at timing determined from this TA value.

The mobile communication system according to the first embodiment enables the mobile station, in performing DC, to use a same TA value for both sending a UL signal to the macrocell base station and sending a UL signal to the small cell base station, and in addition, eliminates the necessity for random access to the small cell base station. This operation can reduce the circuit size and the amount of processing of the mobile station that supports DC.

### Second Embodiment.

In the first embodiment described above, the process illustrated in FIG. 4, that is, synchronization of the SeNB with the MeNB, is performed in which the SeNB starts contention-free random access to the MeNB with the random access start request 42a sent from the MeNB. In contrast, the present embodiment describes a configuration in which the contention-free random access is initiated without using the random access start request 42a. The mobile communication system, the MeNB, the SeNB, and the UE according to the present embodiment are configured similarly to the first embodiment.

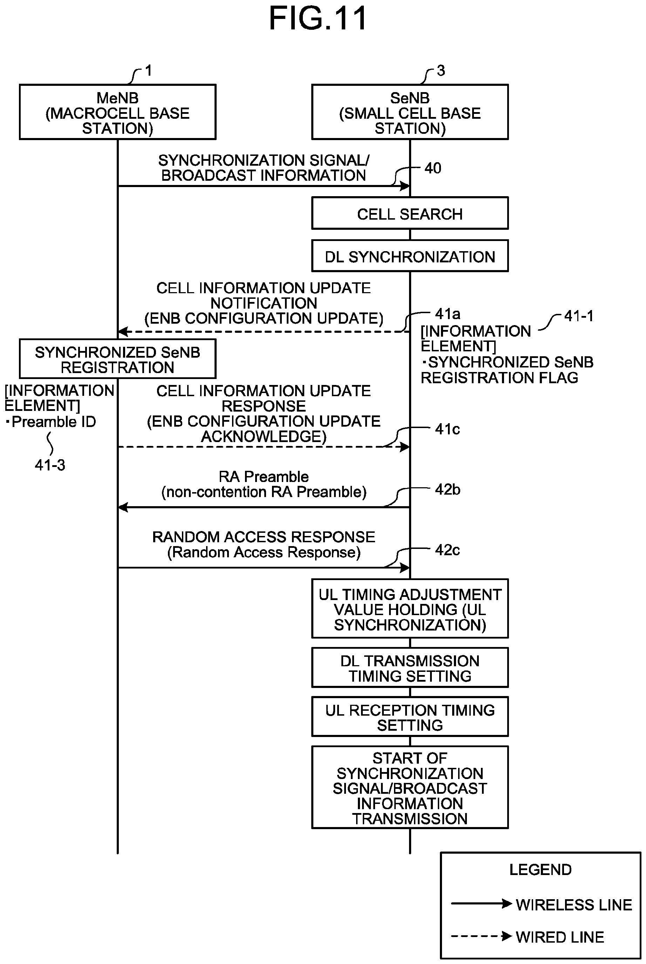

FIG. 11 is a sequence chart illustrating an example of an operation of synchronization with the MeNB performed by the SeNB of the mobile communication system according to the second embodiment.

In the sequence illustrated in FIG. 11, the operation is similar to the sequence illustrated in FIG. 4 after the MeNB 1 receives, from the SeNB 3, the cell information update notification 41a containing the information element "synchronized SeNB registration flag" 41-1 set until the SeNB that has been synchronized with that MeNB is registered, and thus a description thereof will be omitted.

After registration of the SeNB 3 that has been synchronized with that MeNB, the MeNB 1 sends a cell information update response 41c containing an information element "Preamble ID" 41-3 back to the SeNB 3 via a wired line. The information element "Preamble ID" 41-3 is a preamble ID (Preamble ID) used by the SeNB 3 to perform contention-free random access to the MeNB 1. After reception of the cell information update response 41c, the SeNB 3 sends the RA Preamble message 42b to the MeNB 1 using the preamble ID set in the cell information update response 41c to initiate random access. The operation after the MeNB 1 sends the random access response 42c to the SeNB 3 is similar to the sequence illustrated in FIG. 4, and thus a description thereof will be omitted.

The mobile communication system according to the present embodiment eliminates the need for sending the random access start request 42a illustrated in FIG. 4 over a wireless line. This is advantageous in that the wireless resource for the physical dedicated control channel (PDCCH) can be saved as compared to the first embodiment, and can instead be used for another PDCCH message transmission.

In addition, as described in the description of the sequence illustrated in FIG. 4 in the first embodiment, an operation according to the sequence illustrated in FIG. 11 may be performed periodically (e.g., each night when the UE 5 is not connected to the SeNB 3, etc.) to keep the SeNB 3 in synchronization with the MeNB 1.

### Third Embodiment.

In the first and second embodiments described above, the SeNB performs contention-free random access to the MeNB to acquire a TA value. In contrast, the present embodiment describes a configuration in which contention-based random access is performed to acquire a TA value. The mobile communication system, the MeNB, the SeNB, and the UE according to the present embodiment are configured similarly to the first embodiment.

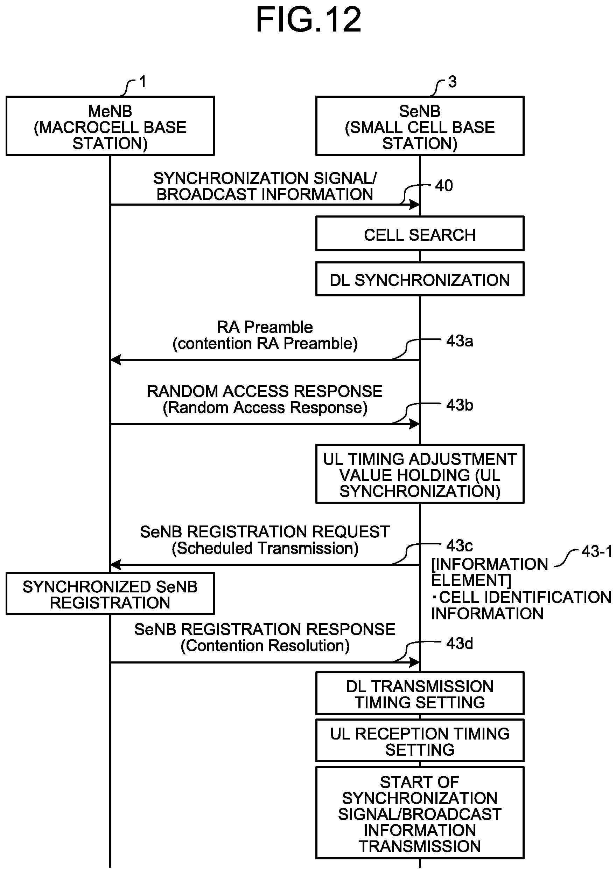

FIG. 12 is a sequence chart illustrating an example of an operation of synchronization with the MeNB performed by the SeNB of the mobile communication system according to the third embodiment. In the sequence illustrated in FIG. 12, the messages exchanged between the SeNB and the MeNB are all sent and received via a wireless line.

In the sequence illustrated in FIG. 12, the operation is similar to the sequence illustrated in FIG. 4 and in FIG. 11 after the SeNB 3 receives the synchronization signal/broadcast information 40 through cell search until the SeNB 3 performs DL synchronization with the MeNB 1, and thus a description thereof will be omitted.

After completion of the DL synchronization, the SeNB 3 uses a preamble ID selected from prepared multiple preamble IDs to send an RA Preamble message 43a to the MeNB 1 to initiate contention-based random access. After reception of the RA Preamble message 43a, the MeNB 1 sends a random access response 43b to the SeNB 3. The random access response 43b received by the SeNB 3 from the MeNB 1 after the transmission of the RA Preamble message 43a during the random access procedure contains a TA value. The SeNB 3 then holds the TA value, which serves as a UL timing adjustment value, to perform UL synchronization with the MeNB 1.

The random access response 43b also includes a Temporary C-RNTI, and UL resource allocation information (UL grant) for sending a UL signal. The SeNB 3 can thus conduct Scheduled Transmission of a UL signal using this set of information. In the sequence illustrated in FIG. 12, the SeNB 3 sends an SeNB registration request 43c to the MeNB 1 through Scheduled Transmission after completion of the UL synchronization with the MeNB 1. The SeNB registration request 43c contains an information element "cell identification information" 43-1 of the SeNB 3, and after reception of this message, the MeNB 1 registers, or stores, the cell identification information of the SeNB 3 as the information of a selectable SeNB to make available in a DC procedure the SeNB 3 that has been synchronized with that MeNB. Thus, synchronized SeNB registration is performed. After this, the MeNB 1 sends an SeNB registration response 43d containing random access contention resolution information. Reception of this message by the SeNB 3 means successful random access, and thus registration of the SeNB 3 in the MeNB 1 completes. After this, the SeNB 3 sets the DL signal transmission timing (DL transmission timing setting) and sets the UL signal reception timing (UL reception timing setting), and then starts to send a synchronization signal and broadcast information. Thus, the SeNB 3 initiates a normal operation of a base station. The operation of the SeNB 3 after the reception of the SeNB registration response 43d is similar to the operation performed by the SeNB 3 after reception of the random access response 42c and completion of the UL synchronization in the sequence illustrated in FIG. 4.

The mobile communication system according to the present embodiment enables the SeNB to acquire a TA value using contention-based random access to perform UL synchronization with the MeNB, and also enables the MeNB to acquire and register the cell identification information of an SeNB that has been synchronized with that MeNB via a wireless line.

As described in the description of the sequence illustrated in FIG. 4 in the first embodiment, an operation according to the sequence illustrated in FIG. 12 may be performed periodically (e.g., each night when the UE 5 is not connected to the SeNB 3, etc.) to keep the SeNB 3 in synchronization with the MeNB 1.

### Fourth Embodiment.

In the third embodiment described above, the SeNB performs contention-based random access using a preamble ID selected by the SeNB. However, a same preamble ID may also be used by another UE or SeNB. Simultaneous use of a same preamble ID may result in failure of random access. The present embodiment illustrates a method for reducing the possibility of random access contention, i.e., preamble ID contention, while the SeNB performs contention-based random access to the MeNB. The mobile communication system, the MeNB, the SeNB, and the UE according to the present embodiment are configured similarly to the first embodiment.

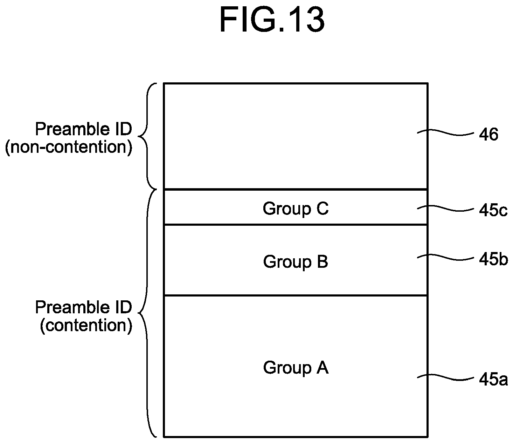

FIG. 13 is a diagram illustrating how preamble IDs are classified. The preamble IDs available for random access are classified into contention-free (non-contention) preamble IDs 46 and contention-based preamble IDs. The contention-based preamble IDs include group A preamble IDs 45a and group B preamble IDs 45b, both of which are defined in the LTE standard. The ranges of the respective groups of preamble IDs are variable, and can be determined on a per-base station basis. A mobile station can acquire these ranges from the broadcast information.

The mobile communication system according to the present embodiment prepares, as contention-based preamble IDs, a group of preamble IDs different from the group A and group B preamble IDs described above. The preamble IDs of this group are herein referred to as group C preamble IDs 45c. The group C preamble IDs 45c are defined as preamble IDs for communication between base stations (hereinafter referred to as "preamble IDs for inter-base station communication"). That is, the group C preamble IDs 45c are not selectable by a mobile station (UE), but are reserved to be selected for contention-based random access between base stations. This configuration allows the SeNB 3 to select a preamble ID for use from the group C preamble IDs 45c when the SeNB 3 performs contention-based random access to the MeNB 1 as illustrated in FIG. 12, thereby eliminating the possibility of random access contention with a UE even in a case of presence of a large number of UEs. This reduces the possibility that the SeNB 3 fail in synchronization with the MeNB 1.

### Fifth Embodiment.

If the method illustrated in the fourth embodiment described above is applied to a mobile communication system, the SeNB can perform synchronization with the MeNB using contention-based random access illustrated in FIG. 12 even if the SeNB does not know in advance with which MeNB to perform synchronization.

If the SeNB does not know in advance with which MeNB to perform synchronization, the SeNB may perform random access accidentally to a neighbor SeNB. In view of such situation, a scheme in which a contention-based group C preamble ID 45c as illustrated in FIG. 13 is defined in broadcast information sent from an MeNB, while a contention-based group C preamble ID 45c is not defined in broadcast information sent from an SeNB enables the SeNB to determine that the broadcast information has been sent from an MeNB. That is, the SeNB performs random access if a group C preamble ID 45c is contained in the broadcast information received during a cell search procedure.

The mobile communication system according to the present embodiment enables the SeNB to avoid performing contention-based random access illustrated in FIG. 12 accidentally to a neighbor SeNB.

The SeNB of the mobile communication system according to the present embodiment does not need the synchronized MeNB information storage unit 306 in the configuration of the SeNB illustrated in FIG. 7. In the SeNB, the control information transceiver 301 determines whether the broadcast information is sent from an MeNB.

The configurations described in the foregoing embodiments are merely examples of various aspects of the present invention. These configurations may be combined with a known other technology, and moreover, a part of such configurations may be omitted and/or modified without departing from the spirit of the present invention.

### Reference Signs List

1 macrocell base station (MeNB); 2 macrocell; 3 small cell base station (SeNB); 4 small cell; 5 mobile station (UE); 100 mobile communication system; 101, 301, 501 control information transceiver; 102, 302 wired data transceiver; 103, 303, 503 L2 function unit; 104, 304, 504 baseband signal processing unit; 105, 305, 505 wireless transceiver; 106 peripheral cell state storage unit; 306 synchronized MeNB information storage unit; 307, 507 cell search unit; 308, 508 TA value management unit.

## Claims

1. A base station covering a small cell located within a macrocell, the base station comprising:
a cell search unit to perform cell search to detect timing of reception of a downlink signal sent from a macrocell base station, being a base station covering the macrocell; and
an information acquisition unit to communicate with the macrocell base station using random access to acquire transmission timing information, which is information on timing of sending of an uplink signal to the macrocell base station,
wherein the base station sends a downlink signal for a mobile station in synchronization with the timing of reception of the downlink signal, and receives an uplink signal from the mobile station at timing based on the transmission timing information.

2. The base station according to claim 1, comprising:
a storage unit to store cell identification information that indicates a macrocell base station with which the base station to perform synchronization,
wherein
when the cell search unit finds a macrocell base station having cell identification information stored in the storage unit, the cell search unit detects timing of reception of a downlink signal sent from the macrocell base station found, and
the information acquisition unit acquires the transmission timing information from the macrocell base station having cell identification information stored in the storage unit.

3. The base station according to claim 1 or 2,
wherein
the base station assigns information for identifying a mobile station within the small cell covered by the base station, to a mobile station that has been connected to the macrocell base station via the macrocell base station, and
the base station causes the mobile station that has been connected to the macrocell base station to send an uplink signal to the base station at a same timing as the timing of sending of an uplink signal to the macrocell base station, and skips random access for determining a timing at which the mobile station that has been connected to the macrocell base station sends an uplink signal to the base station.

4. The base station according to claim 3, wherein the base station acquires, from the macrocell base station, information on an amount of buffered uplink data in the mobile station that has been connected to the macrocell base station, and based on the information on the amount of buffered uplink data, the base station allocates an uplink resource to the mobile station that has been connected to the macrocell base station.

5. The base station according to any one of claims 1 to 4, wherein the random access is contention-free random access.

6. The base station according to claim 5, wherein the base station informs the macrocell base station that the base station is a base station to be synchronized with the macrocell base station when the base station detects the timing of reception of a downlink signal sent from the macrocell base station, and the base station initiates communication using the contention-free random access when the base station receives a request from the macrocell base station.

7. The base station according to claim 5, wherein the base station informs the macrocell base station that the base station is a base station to be synchronized with the macrocell base station when the base station detects the timing of reception of a downlink signal sent from the macrocell base station, and the base station initiates communication using the contention-free random access when the base station receives notification of a preamble ID for use in the contention-free random access in response to the informing.

8. The base station according to any one of claims 1 to 4, wherein the random access is contention-based random access.

9. The base station according to claim 8,
wherein
the base station initiates communication using the contention-based random access when the base station detects the timing of reception of a downlink signal sent from the macrocell base station, and
the base station informs the macrocell base station that the base station is a base station to be synchronized with the macrocell base station when the base station acquires the transmission timing information.

10. The base station according to claim 8 or 9, wherein the base station performs the contention-based random access using a preamble ID for inter-base station communication, prepared as a preamble ID for use by a base station covering a small cell to perform random access to the macrocell base station.

11. The base station according to claim 10, wherein if a downlink signal received during the cell search contains the preamble ID for inter-base station communication, the base station performs the contention-based random access using the preamble ID for inter-base station communication contained in the downlink signal received.

12. A base station covering a macrocell including a small cell deployed therein, the base station comprising:
a storage unit to store cell identification information that indicates a small cell base station being a base station covering the small cell, and
a control unit to, if cell identification information identical to the cell identification information stored in the storage unit is received from a mobile station that has been connected to the base station, and a small cell base station corresponding to the cell identification information received sends a downlink signal having a signal intensity at the mobile station greater than or equal to a threshold, request the small cell base station corresponding to the cell identification information received to initiate communication with the mobile station.

13. A mobile station in a mobile communication system including a macrocell base station covering a macrocell and a small cell base station covering a small cell located within the macrocell, the mobile station comprising:
a cell search unit to perform cell search to detect timing of reception of a downlink signal sent from the macrocell base station or from the small cell, and
an information acquisition unit to communicate, using random access, with a connected base station, being either the macrocell base station or the small cell base station for which the cell search unit has detected the timing of reception, to acquire transmission timing information, which is information on timing of sending of an uplink signal to the connected base station,
wherein
if the mobile station establishes a connection to, and communicates with, both of the macrocell base station and the small cell base station, the information acquisition unit sends an uplink signal to the macrocell base station and an uplink signal to the small cell base station at timing based on the transmission timing information acquired from the macrocell base station.

14. A mobile communication system including a macrocell base station covering a macrocell and a small cell base station covering a small cell located within the macrocell,
wherein
the small cell base station includes
a cell search unit to perform cell search to detect timing of reception of a downlink signal sent from the macrocell base station, and
an information acquisition unit to communicate with the macrocell base station using random access to acquire transmission timing information, which is information on timing of sending of an uplink signal to the macrocell base station,
the macrocell base station includes
a storage unit to store cell identification information that indicates the small cell base station, and
a control unit to, if cell identification information identical to the cell identification information stored in the storage unit is received from a mobile station that has been connected to the macrocell base station, and a small cell base station corresponding to the cell identification information received sends a downlink signal having a signal intensity at the mobile station greater than or equal to a threshold, request the small cell base station corresponding to the cell identification information received to initiate communication with the mobile station, and
if the small cell base station receives a request, from the macrocell base station, to initiate communication with the mobile station being connected to the macrocell base station, the small cell base station sends a downlink signal for the mobile station being connected to the macrocell base station, in synchronization with the timing of reception of a downlink signal detected by the cell search unit, and receives an uplink signal for the mobile station being connected to the macrocell base station at timing based on the transmission timing information.
